# EUROPÄISCHE PATENTSCHRIFT

(11) **EP 3 074 271 B1**
(45) Veröffentlichungstag und Bekanntmachung des Hinweises auf die Patenterteilung: **08.01.2020**
(21) Anmeldenummer: 14802427.6
(22) Anmeldetag: 21.11.2014
(51) Int. Cl.: B60N 2/433, B60N 2/75, B60N 2/42

(54) **SYSTEM MIT EINER SCHWENKBAREN ARMLEHNE UND EINEM PENDELELEMENT**
SYSTEM COMPRISING A PIVOTABLE ARMREST AND A PENDULUM ELEMENT
SYSTÈME POURVU D'UN ACCOUDOIR PIVOTANT ET D'UN ÉLÉMENT PENDULAIRE

(30) Priorität: 27.11.2013 DE 102013019719; 31.03.2014 DE 102014206031
(43) Veröffentlichungstag der Anmeldung: 05.10.2016
(73) Patentinhaber: Adient Luxembourg Holding S.à r.l., 1855 Luxembourg (LU)
(72) Erfinder: JAKUBEC, Ivan, 91701 Trnava (SK); MARTINKA, Michal, 91501 Nove Mesto nad Vahom (SK); REZBARIK, Miroslav, 91101 Trencin (SK)
(74) Vertreter: Loock, Jan Pieter
(86) Internationale Anmeldenummer: PCT/EP2014/075324
(87) Internationale Veröffentlichungsnummer: WO 2015/078792

(56) Entgegenhaltungen:
- EP-A1- 0 518 358
- CN-U- 201 998 856
- US-A- 5 476 307
- US-A- 5 658 043
- US-A- 5 873 633

## Beschreibung

### Stand der Technik

Die vorliegende Erfindung betrifft schwenkbare Armlehnen. Schwenkbare Armlehnen sind aus dem Stand der Technik bekannt und lassen sich häufig an Fahrzeugsitzen, vorzugsweise an deren Rückenlehnen, finden. Insbesondere lassen sich schwenkbare Armlehnen, wenn sie gerade nicht gebraucht werden, platzsparend in eine Verstaustellung überführen. Typischerweise umfasst die Rückenlehne eine Aussparung, in die die schwenkbare Armlehne zum Verstauen hineingedrückt werden kann. In der Gebrauchsstellung kann die Armlehne nicht nur als Stütze für den Arm dienen, sondern den Komfort für den Passagier durch zusätzliche Staufläche oder leicht zugängliche Bedienelemente weiter erhöhen.

Nachteilig ist bei den schwenkbaren Armlehnen aus dem Stand der Technik, dass in einer Unfallsituation oder bei einem starken Abbremsen des Kraftfahrzeugs Kräfte auftreten können, durch die die schwenkbare Armlehne aus ihrer Verstaustellung unkontrolliert herausschwenkt, wodurch das Verletzungsrisiko für den Passagier erhöht wird.

Aus der Druckschrift CN 201 998 856 U ist ein System mit einer schwenkbaren Armlehne und einem Pendelelement bekannt, welches ein Herabfallen der schwenkbaren Armlehne aus einer Verstaustellung in einer Abbrems- oder Unfallsituation verhindert.

### Offenbarung der Erfindung

Es ist Aufgabe der vorliegenden Erfindung, ein System zur Verfügung zu stellen, mit dem die schwenkbare Armlehne in einer Unfallsituation daran gehindert wird, unkontrolliert aus einer Verstaustellung herauszuschwenken. Dabei ist es wünschenswert, dass die dafür getroffenen Maßnahmen die Funktionalität und den Betrieb der schwenkbaren Armlehne im Regelfall, d. h. in einer Nicht-Unfall- oder Nicht-Abbremssituation, möglichst nicht beeinträchtigen. Außerdem soll das System nach der Unfall- oder Abbremssituation möglichst schnell und einfach in einen funktionstüchtigen Zustand zurückkehren.

Die Aufgabe der vorliegenden Erfindung wird gelöst durch ein System gemäß Anspruch 1.

Insbesondere ist es vorgesehen, dass das System in einem Fahrzeug angeordnet ist, vorzugsweise an einem Fahrzeugsitz. Mittels des erfindungsgemäßen Systems kann durch das formschlüssige Zusammenwirken von Verbindungselement und Pendelelement verhindert werden, dass die schwenkbare Armlehne eine Verstauposition verlässt, wenn auf das System eine entsprechende Kraft, insbesondere eine Scheinkraft, entlang der Kraftrichtung wirkt. Die Kraft auf das System kann beispielsweise durch eine Unfallsituation oder ein scharfes Abbremsen hervorgerufen werden und wirkt entlang einer Kraftrichtung, d. h. im Wesentlichen entlang einer senkrecht zur Primärachse verlaufenden Richtung, insbesondere entlang einer durch eine Fahrtrichtung vorgegebenen Richtung. Weiterhin ist es vorgesehen, dass die Armlehne in der Verstaustellung im Wesentlichen vertikal und in der Gebrauchsstellung im Wesentlichen horizontal angeordnet ist. Insbesondere ist es vorgesehen, dass die Armlehne
-- von der Verstaustellung in die Gebrauchsstellung durch eine Schwenkbewegung um die Primärachse entlang einer ersten Drehrichtung überführt wird und
-- von der Gebrauchsstellung in die Verstaustellung durch eine Schwenkbewegung um die Primärachse entlang einer zweiten Drehrichtung überführt wird, wobei die erste Drehrichtung der zweiten Drehrichtung entgegengesetzt ist. Insbesondere ist es vorgesehen, dass die schwenkbare Armlehne reversibel zwischen einer Gebrauchsstellung und einer Verstaustellung überführbar ist, wobei das System derart konfiguriert ist, dass das formschlüssige Zusammenwirken des Pendelelements ein Verlassen der Armlehne aus der Verstaustellung verhindert. Insbesondere ist die erste Position eine für den Formschluss vorgesehene Position.

Vorteilhafte Ausgestaltungen und Weiterbildungen der Erfindung sind den Unteransprüchen sowie der Beschreibung unter Bezugnahme auf die Zeichnungen entnehmbar.

Erfindungsgemäß ist es vorgesehen, dass das Pendelelement über ein eine Rückstellkraft aufweisendes Federelement mit dem Halterungsmittel verbunden ist, wobei das Federelement derart konfiguriert ist, dass die Rückstellkraft einer Schwenkbewegung des Pendelelements entlang der ersten Drehrichtung entgegenwirkt. Dadurch wird das Pendelelement im Regelfall, d. h. in der Nicht-Unfallsituation oder der Nicht-Abbremssituation, durch das Federelement in vorteilhafter Weise davon abgehalten, mit dem Verbindungselement zusammenzuwirken. Insbesondere ist das Federelement derart ausgestaltet, dass das Pendelelement im Regelfall kontaktfrei zum Verbindungselement angeordnet ist. Weiterhin ist erfindungsgemäß vorgesehen, dass das Federelement das Pendelelement unmittelbar nach der Unfallsituation oder der Abbremssituation in seine ursprüngliche Position zurückführt.

Erfindungsgemäß ist vorgesehen, dass das Federelement derart konfiguriert ist, dass die auf das System wirkende Kraft einen Schwellenwert für das Verschwenken des Pendelelements überschreiten muss. Voraussetzung für das Verschwenken des Pendelelements in eine für den Formschluss vorgesehene Position, d. h. in die erste Position, ist eine Kraft, die der Rückstellkraft des Federelements entgegenwirkt und die Rückstellkraft überwindet bzw. überkompensiert. Durch die Wahl des Federelements, insbesondere der Rückstellkraft des Federelements, lässt sich demnach festlegen, wie groß die Kraft sein muss, die das Pendelelement in die für den Formschluss vorgesehene Position überführen kann. Dadurch lässt sich in vorteilhafter Weise die Sensibilität des Systems mit der schwenkbaren Armlehne und dem Pendelelement durch die geeignete Wahl des Federelements einstellen.

Erfindungsgemäß ist es vorgesehen, dass das Federelement am Halterungsmittel angelenkt ist. Insbesondere ist das Federelement an einem ersten Ende um eine parallel zur Primärachse verlaufende Achse verschwenkbar. Dadurch lässt sich sicherstellen, dass die maximal mögliche Rückstellkraft des Federelements beim Verschwenken des Pendelelements auf das Pendelelement wirkt. Andernfalls würde die Gefahr einer Verformung des Federelements entlang einer ungewollten Richtung bestehen, wodurch die auf das Pendelelement übertragbare Rückstellkraft reduziert würde.

In einer weiteren Ausführungsform ist es vorgesehen, dass das Halterungsmittel einen zweiten Anschlag aufweist, wobei der zweite Anschlag derart konfiguriert ist, dass bei einem Verschwenken des Pendelelements entlang der ersten Drehrichtung die Positionierung des Pendelelements für das formschlüssige Zusammenwirken mit dem Verbindungselement mittels des zweiten Anschlags zumindest unterstützt wird. Insbesondere ist der zweite Anschlag derart ausgestaltet, dass ein Verschwenken des Pendelelements entlang der ersten Drehrichtung beendet wird. Vorzugsweise wirkt der zweite Anschlag formschlüssig entlang der ersten Drehrichtung mit dem Pendelelement zum Beenden der Schwenkbewegung zusammen. Mit anderen Worten: Das Pendelelement schlägt am zweiten Anschlag an und wird dadurch für das formschlüssige Zusammenwirken mit dem Verbindungselement positioniert. Dadurch lässt sich in vorteilhafter Weise vermeiden, dass das Pendelelement über die für den Formschluss vorgesehene Position hinaus verschwenkt wird und dadurch der Formschluss nicht garantiert werden kann. Mittels des zweiten Anschlags lässt sich in vorteilhafter Weise ein System realisieren, bei dem das formschlüssige Zusammenwirken von Pendelelement und Verbindungselement sicherstellbar ist, wenn die auf das System wirkende Kraft größer ist als ein Schwellenwert.

In einer weiteren Ausführungsform ist es vorgesehen, dass das Pendelelement und das Verbindungselement derart ausgestaltet sind, dass das formschlüssige Zusammenwirken zwischen Pendelelement und Verbindungselement entlang einer im Wesentlichen senkrecht zur Kraftrichtung (der auf das System wirkenden Kraft) verlaufenden Richtung erfolgt. Dadurch lässt sich ein System mit schwenkbarer Armlehne und Pendelelement realisieren, mit dem die auf das System wirkende Kraft in das formschlüssige Zusammenwirken zweier Elemente entlang einer senkrecht zur Kraftrichtung verlaufenden Richtung kanalisiert wird.

In einer weiteren Ausführungsform ist es vorgesehen, dass das Pendelelement eine erste Kontaktfläche und das Verbindungselement eine zweite Kontaktfläche umfasst, wobei die erste Kontaktfläche und die zweite Kontaktfläche beim formschlüssigen Zusammenwirken des Pendelelements mit dem Verbindungselement in Kontakt stehen. Insbesondere ist es vorgesehen, dass die erste und die zweite Kontaktfläche zueinander komplementär ausgestaltet sind. Insbesondere ist es denkbar, dass die erste und die zweite Kontaktfläche derart ausgestaltet sind, dass die erste und die zweite Kontaktfläche den Formschluss unterstützen. Weiterhin ist es vorstellbar, dass die erste Kontaktfläche in ihrer Länge entlang des Umfangs mehr als 10% des Umfangs des Pendelelements ausmacht und/oder die zweite Kontaktfläche in ihrer Länge entlang des Umfangs mehr als 10% des Umfangs des Verbindungselements ausmacht. Als Umfang wird hier der Umfang von Pendelelement und Verbindungselement verstanden, der in einer senkrecht zur Primärachse verlaufenden Ebene liegt.

In einer weiteren Ausführungsform ist es vorgesehen, dass das Verbindungselement ein Stoppelement aufweist, wobei das Stoppelement in der Gebrauchsstellung mit einem ersten Anschlag des Halterungsmittels formschlüssig entlang der zweiten Drehrichtung zusammenwirkt. Dadurch lässt sich in vorteilhafter Weise verhindern, dass die Armlehne durch eine Schwenkbewegung entlang der zweiten Drehrichtung über die Gebrauchsstellung hinaus verschwenkt wird. In vorteilhafter Weise ist der erste Anschlag in das Halterungsmittel integriert, wodurch sich ein besonders kompaktes System mit schwenkbarer Armlehne und Pendelelement realisieren lässt.

Ein weiterer Gegenstand der vorliegenden Erfindung ist eine Rückenlehne aufweisend ein System mit einer schwenkbaren Armlehne und einem Pendelelement, wie es oben beschrieben wurde.

Ein weiterer Gegenstand der vorliegenden Erfindung ist ein Fahrzeugsitz aufweisend ein System mit einer schwenkbaren Armlehne und einem Pendelelement, wie es oben beschrieben wurde.

Weitere Einzelheiten, Merkmale und Vorteile der Erfindung ergeben sich aus den Zeichnungen sowie aus der nachfolgenden Beschreibung von bevorzugten Ausführungsformen anhand der Zeichnungen. Die Zeichnungen illustrieren dabei lediglich beispielhafte Ausführungsformen der Erfindung.

### Kurze Beschreibung der Figuren

**Figur 1** zeigt in vier Abbildungen Beispiele für schwenkbare Armlehnen.
**Figur 2** zeigt eine schwenkbare Armlehne gemäß einer ersten beispielhaften Ausführungsform in einer Verstaustellung und in einer Gebrauchsstellung.
**Figur 3** zeigt ein Halterungsmittel für ein System mit einer verschwenkbaren Armlehne und einem Pendelelement gemäß der ersten beispielhaften Ausführungsform der vorliegenden Erfindung in einer Explosionsdarstellung und einer perspektivischen Ansicht.
**Figur 4** zeigt im Detail das Halterungsmittel für das System mit der verschwenkbaren Armlehne und dem Pendelelement gemäß der ersten beispielhaften Ausführungsform der vorliegenden Erfindung in einer Seitenansicht, wobei sich die Armlehne von links nach rechts in der Verstaustellung, in einer Unfallstellung und in der Gebrauchsstellung befindet.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

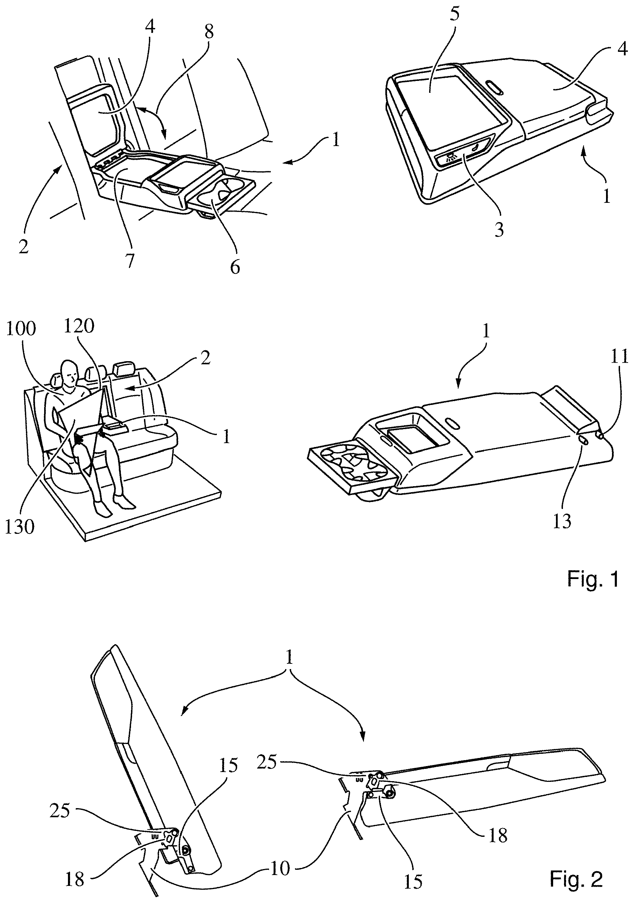

In **Figur 1** sind in vier Abbildungen Beispiele für schwenkbare Armlehnen 1 dargestellt, die die vorliegende Erfindung betreffen. Vorzugsweise sind solche Armlehnen 1 in eine Rückenlehne 2 eines Fahrzeugsitzes, insbesondere in die Rückenlehne 2 einer Rückbank eines Fahrzeugs, integriert. Dabei lässt sich die Armlehne 1 zwischen einer Verstaustellung und einer Gebrauchsstellung reversibel überführen. In der Gebrauchsstellung kann ein Passagier 100 des Fahrzeugs seinen Arm auf der Armlehne abstützen. Insbesondere ist die Armlehne derart mit einer Polsterung ummantelt, dass der Passagier 100 sich in der Verstaustellung mit dem Rücken an eine erste gepolsterte Seite der Armlehne 1 anlehnen und in der Gebrauchsstellung seinen Arm auf einer zweiten gepolsterten Seite der Armlehne 1 abstützen kann. Zudem ist es vorstellbar, dass die Armlehne 1 über einen Stauraum 7 verfügt, der über eine in die Armlehne 1 eingelassene Klappe 4 in der Gebrauchsstellung zugänglich ist. Insbesondere ist es denkbar, dass die Klappe 4 um eine Klappachse 13 durch eine Kippbewegung 8 verschwenkbar an die Armlehne 1 angelenkt ist. Weiterhin ist es vorstellbar, dass die Armlehne 1 zumindest teilweise dem Passagier 100 eine Stellfläche 5, insbesondere im vorderen Drittel der Armlehne 1, zur Verfügung stellt, auf der der Passagier 100 in der Gebrauchsstellung der Armlehne 1 Gegenstände zwischenlagern bzw. abstellen kann. Zudem ist es denkbar, dass die schwenkbare Armlehne 1 Betätigungselemente 3, wie beispielsweise Druckknöpfe, Drehknöpfe oder andere Schalter, insbesondere in eine Steuertafel bzw. Schalttafel integriert, aufweist, wobei das Betätigen des Betätigungselements 3 eine Änderung im Fahrzeuginnenraum, vorzugsweise am Fahrzeugsitz, hervorruft. Beispielsweise lässt sich die Temperatur oder die Beleuchtung im Fahrzeuginnenraum ändern. Zudem ist es vorstellbar, dass die schwenkbare Armlehne 1 einen Getränkehalter 6 umfasst, wobei der Getränkehalter 6 in der Gebrauchsstellung aus der Armlehne 1 herausgezogen werden kann. Weiterhin ist es vorgesehen, dass die Rückenlehne 2 des Fahrzeugsitzes eine Rückenlehnenaussparung aufweist, in die die Armlehne 1 für die Einnahme der Verstaustellung hineingedrückt wird. Vorzugweise weist die Rückenlehnenaussparung eine beleuchtbare Wandung auf, die ein Umgebungslicht für den Fahrzeuginnenraum zur Verfügung stellt. Insbesondere weist die Rückenlehnenaussparung eine Wandung auf, an die Lichtquellen 120 anordbar sind, wobei ein von der Lichtquelle 120 verursachter Lichtkegel 130 auf das Blickfeld des Passagiers 100 gerichtet ist und dadurch beispielsweise den Passagier 100 beim Lesen unterstützt. Insbesondere ist es vorstellbar, dass die Lichtquelle 120 verschwenkbar und dadurch der Lichtkegel 130 individuell einstellbar ist.

In **Figur 2** ist eine Armlehne 1 gemäß einer ersten beispielhaften Ausführungsform der vorliegenden Erfindung dargestellt, wobei sich die Armlehne 1 auf der linken Seite in der Verstaustellung und auf der rechten Seite in der Gebrauchsstellung darstellt. Es ist dabei vorgesehen, dass die Armlehne beim Übergang von der Verstaustellung in die Gebrauchsstellung im Wesentlichen um 90° verschwenkt wird. Vorzugsweise ist die Armlehne 1 in der Verstaustellung im Wesentlichen vertikal und der Gebrauchsstellung im Wesentlichen horizontal angeordnet. Zum Verschwenken ist die Armlehne 1 an ein Halterungsmittel 10 angelenkt, wobei das Halterungsmittel 10 seinerseits starr mit einem Teil des Fahrzeugs, vorzugsweise der Rückenlehne 2 des Fahrzeugsitzes, verbunden ist. Ein Verbindungselement 15 ist an mindestens zwei Stellen fest mit der Armlehne 1 verbunden. Insbesondere ist das Verbindungselement 15 drehfest mit der Armlehne 1 verbunden, d. h. das Verbindungselement 15 wird beim Verschwenken der Armlehne 1 mitverschwenkt. Weiterhin ist es vorgesehen, dass das Verbindungselement 15 ein Stoppelement 19, das ein Verschwenken der Armlehne 1 über die Gebrauchsstellung hinaus verhindert, aufweist. Dabei ist es vorgesehen, dass das Stoppelement 19 bei der Einnahme der Gebrauchsstellung mit dem Halterungsmittel 10 entlang einer senkrecht zur Primärachse 11 verlaufenden Richtung formschlüssig mit einem ersten Anschlag des Halterungsmittels 10 zusammenwirkt und dadurch eine Schwenkbewegung der Armlehne 1 bei der Überführung von der Verstaustellung in die Gebrauchsstellung beendet. Insbesondere ist es vorgesehen, dass das Verbindungselement 15 bei einem Verschwenken der Armlehne 1 entlang einer zweiten Drehrichtung die Schwenkbewegung beendet, indem das Stoppelement 19 mit dem Halterungsmittel 10, insbesondere mit dessen ersten Anschlag 21, formschlüssig entlang der zweiten Drehrichtung zusammenwirkt. Weiterhin umfasst das Halterungsmittel 10 ein Pendelelement 18, das um eine Sekundärachse 12 verschwenkbar am Halterungsmittel 10 angelenkt ist und über ein ebenfalls am Halterungsmittel 10 angeordnetes Federelement 25 positioniert wird. Insbesondere sorgt das Federelement 25 dafür, dass das Pendelelement 18 im Regelfall, d. h. in einer Nicht-Unfallsituation, im Wesentlichen kontaktfrei zum Verbindungselement 15 angeordnet ist.

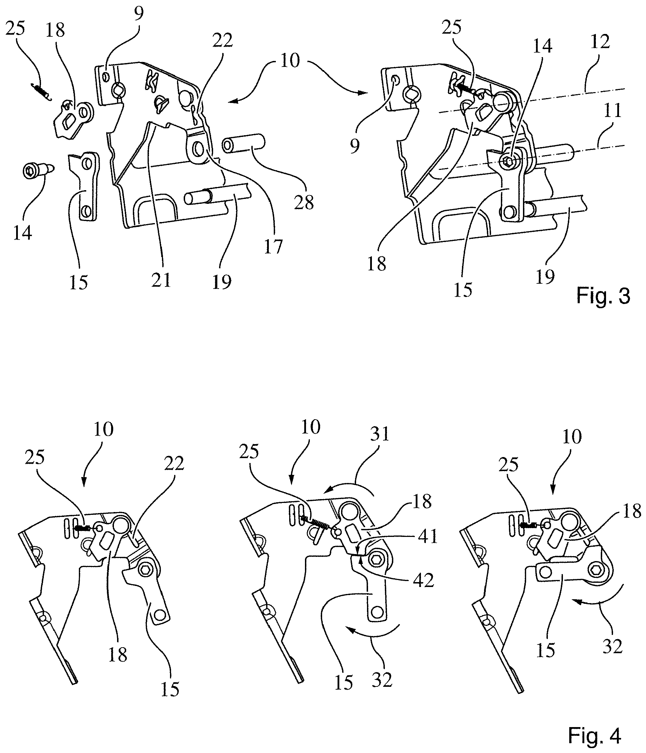

In **Figur 3** ist das Halterungsmittel 10 für das System mit der schwenkbaren Armlehne 1 und dem Pendelelement 18 gemäß der ersten Ausführungsform der vorliegenden Erfindung dargestellt, wobei das Halterungsmittel 10 und das Verbindungselement 15 auf der linken Seite in einer Explosionsdarstellung und auf der rechten Seite in zusammengefügter Form in einer perspektivischen Ansicht illustriert sind. Es ist dabei vorgesehen, dass das Halterungsmittel 10 einen Grundkörper aufweist, der über Befestigungsvorrichtungen 9 an einem Teil der Fahrzeugkarosserie oder der Innenausstattung, wie beispielsweise an der Rückenlehne des Fahrzeugsitzes, befestigbar ist. Beispielsweise handelt es sich bei der Befestigungsvorrichtung um ein Loch, über das das Halterungsmittel fest an die Fahrzeugkarosserie angeschraubt werden kann. Weiterhin ist ein zweiter Anschlag 22 vorgesehen, der eine Verschwenkbewegung des Pendelelements 18 entlang einer ersten Drehrichtung 31 begrenzt. Für eine Verschwenkbewegung des Pendelelements 18 entlang der ersten Drehrichtung 31 muss zunächst eine Rückstellkraft des Federelements 25, über das das Pendelelement 18 ebenfalls mit dem Halterungsmittel 10 verbunden ist, überwunden werden. Weiterhin ist es vorgesehen, dass zur Verschwenkung um die Primärachse 11 das Pendelelement 18 eine erste Aussparung aufweist, die einen Vorsprung des Halterungsmittels 10 umgibt. Weiterhin ist es vorgesehen, dass der Vorsprung derart ausgestaltet ist, dass der Vorsprung und der Grundkörper im Wesentlichen eine Bewegung des Pendelelements 18 entlang einer parallel zur Sekundärachse 12 verlaufenden Richtung verhindern. Weiterhin ist es vorgesehen, dass der Grundkörper des Halterungsmittels 10 eine zweite Aussparung, vorzugsweise eine kreisförmige Aussparung 17, aufweist, in der eine um die Primärachse 11 verdrehbare Schwenkachse 28 gelagert ist. Vorzugsweise ist es vorgesehen, dass das Verbindungselement 15 und die schwenkbare Armlehne 1 räumlich durch den Grundkörper getrennt und über die in der zweiten Aussparung verdrehbar gelagerte Schwenkachse 28 drehfest miteinander verbunden sind. Zur Verbindung von der schwenkbaren Armlehne 1 und/oder dem Verbindungselement 15 mit der Schwenkachse 28 ist ein Verknüpfungsmittel, wie beispielsweise eine Schraube 14, vorgesehen.

In **Figur 4** ist das Halterungsmittel 10 für das System mit der verschwenkbaren Armlehne 1 und dem Pendelelement 18 gemäß der ersten beispielhaften Ausführungsform der vorliegenden Erfindung in einer Seitenansicht dargestellt, wobei sich die Armlehne 1 von links nach rechts in der Verstaustellung, in einer Unfallstellung und in der Gebrauchsstellung befindet. In der Gebrauchsstellung wird das Pendelelement 18 durch die Rückstellkraft des Federelements 25 daran gehindert, eine andernfalls durch die Schwerkraft bevorzugte Stellung einzunehmen. In einer solchen Stellung könnte das Pendelelement 18 möglicherweise ungewollt in Kontakt treten mit dem Verbindungselement 15 und dadurch ein Verschwenken der Armlehne 1 behindern. In einer Unfallsituation (oder auch bei einem starken Abbremsen) wirken Kräfte, insbesondere Scheinkräfte, auf das Pendelelement 18. Sind diese Kräfte groß genug, die Rückstellkraft des Federelements 25 zu überwinden bzw. zu überkompensieren, wird das Pendelelement 18 entlang der ersten Drehrichtung 31 verschwenkt. Insbesondere ist es vorgesehen, dass das verschwenkte Pendelelement 18 über eine erste Kontaktfläche 41 mit einer zweiten Kontaktfläche 42 des Verbindungselements 15 in Kontakt tritt, wobei durch ein formschlüssiges Zusammenwirken des Pendelelements 18 mit dem Verbindungselement 15 ein Verschwenken des Verbindungselements 15 entlang der ersten Drehrichtung 31, die der zweiten Drehrichtung 32 entgegengesetzt ist, verhindert wird. Es ist dabei vorstellbar, dass das Verbindungselement 15 vor dem formschlüssigen Zusammenwirken mit dem Pendelelement 18 bereits entlang der zweiten Drehrichtung verschwenkt wurde. Weiterhin ist es vorgesehen, dass mittels des zweiten Anschlags 22 das Pendelelement 18 für das formschlüssige Zusammenwirken vorpositioniert bzw. ausgerichtet wird. Da das Verbindungselement 15 und die schwenkbare Armlehne 1 drehfest miteinander verbunden sind, wird durch den Formschluss, der durch die beim Unfall auftretenden Kräfte initiiert wird, verhindert, dass die Armlehne 1 bei einem Unfall unkontrolliert aus der Verstauposition herausschwenkt. Dadurch wird ein durch die Armlehne 1 hervorgerufenes Verletzungsrisiko bei einem Unfall oder einem starken Abbremsen des Fahrzeugs reduziert. Weiterhin ist es vorgesehen, dass das Pendelelement 18 in der Gebrauchsstellung derart durch das Federelement 25 angeordnet ist, dass das Pendelelement 18 das Verbindungselement 15 nicht kontaktiert. Es ist dabei auch vorstellbar, dass der Formschluss unmittelbar nach dem Unfall oder dem starken Abbremsen wieder aufgehoben wird, indem das Federelement 25 das Pendelelement 18 wieder in seine ursprüngliche Position zurückführt. Dadurch lässt sich ohne weiteres Zutun des Passagiers 100 die Funktionalität der schwenkbaren Armlehne 1 wiederherstellen. Schließlich lässt sich die schwenkbare Armlehne 1 in die Gebrauchsstellung überführen, wobei das Verbindungselement 15 entlang einer zweiten Drehrichtung 32 verschwenkt.

### Bezugszeichenliste

- 1: schwenkbare Armlehne
- 2: Rückenlehne
- 3: Betätigungselement
- 4: Klappe
- 5: Stellfläche
- 6: Getränkehalter
- 7: Stauraum
- 8: Kippbewegung
- 9: Befestigungsvorrichtung
- 10: Halterungsmittel
- 11: Primärachse
- 12: Sekundärachse
- 13: Klappachse
- 14: Schraube
- 15: Verbindungselement
- 17: kreisförmige Aussparung
- 18: Pendelelement
- 19: Stoppelement
- 21: erster Anschlag
- 22: zweiter Anschlag
- 25: Federelement
- 28: Schwenkachse
- 31: erste Drehrichtung
- 32: zweite Drehrichtung
- 41: erste Kontaktfläche
- 42: zweite Kontaktfläche
- 100: Passagier
- 120: Lichtquelle
- 130: Lichtkegel

## Patentansprüche

1. System mit einer schwenkbaren Armlehne (1), einem Halterungsmittel (10) und einem Pendelelement (18), wobei die Armlehne (1) an dem Halterungsmittel (10) um eine Primärachse (11) verschwenkbar angelenkt ist, wobei die Armlehne (1) drehfest mit einem Verbindungselement (15) verbunden ist und das Halterungsmittel (10) das Pendelelement (18) aufweist, wobei das Pendelelement (18) um eine Sekundärachse (12) verschwenkbar ist, wobei das Verbindungselement (15) und das Pendelelement (18) derart ausgestaltet sind, dass bei einer auf das System wirkenden Kraft das Pendelelement (18) in eine erste Position verschwenkbar ist, wobei das verschwenkte Pendelelement (18) in der ersten Position derart mit dem Verbindungselement (15) formschlüssig zusammenwirkt, dass der Formschluss einem Verschwenken des Verbindungselements (15) entlang einer zweiten Drehrichtung (32) entgegenwirkt, wobei die erste Drehrichtung (31) entgegengesetzt zur zweiten Drehrichtung (32) verläuft, **dadurch gekennzeichnet, dass** das Pendelelement (18) über ein Federelement (25) mit einer Rückstellkraft vorgespannt ist, wobei das Federelement (25) derart konfiguriert ist, dass die Rückstellkraft einer Verschwenkbewegung des Pendelelements (18) entlang der ersten Drehrichtung (31) entgegenwirkt, wobei das Federelement (25) an dem Halterungsmittel (10) angelenkt ist, wobei das Federelement (25) derart konfiguriert ist, dass die auf das System wirkende Kraft einen Schwellenwert für das Verschwenken des Pendelelements (18) überschreiten muss, wobei das Federelement (25) so konfiguriert ist, dass das Federelement (25) nach Ausbleiben der auf das System wirkenden Kraft das Pendelelement (18) unmittelbar nach einer Unfallsituation oder einer Abbremssituation in seine ursprüngliche Position zurückführt.

2. System gemäß Anspruch 1, wobei das Halterungsmittel (10) einen zweiten Anschlag (22) aufweist, wobei der zweite Anschlag (22) derart konfiguriert ist, dass bei einem Verschwenken des Pendelelements (18) entlang der ersten Drehrichtung (31) die Positionierung des Pendelelements (18) für das formschlüssige Zusammenwirken mit dem Verbindungselement (15) mittels des zweiten Anschlags (22) unterstützbar ist.

3. System gemäß einem der vorhergehenden Ansprüche, wobei das Pendelelement (18) und das Verbindungselement (15) derart ausgestaltet sind, dass das formschlüssige Zusammenwirken zwischen Pendelelement (18) und Verbindungselement (15) entlang einer im Wesentlichen senkrecht zur Kraftrichtung verlaufenden Richtung erfolgt.

4. System gemäß einem der vorhergehenden Ansprüche, wobei das Pendelelement (18) eine erste Kontaktfläche (41) und das Verbindungselement (15) eine zweite Kontaktfläche (42) umfasst, wobei die erste Kontaktfläche (41) und die zweite Kontaktfläche (42) beim formschlüssigen Zusammenwirken des Pendelelements (18) mit dem Verbindungselement (15) in Kontakt zueinander angeordnet sind.

5. System gemäß einem der vorhergehenden Ansprüche, wobei die schwenkbare Armlehne (1) reversibel zwischen einer Gebrauchsstellung und einer Verstaustellung überführbar ist, wobei das System derart konfiguriert ist, dass das formschlüssige Zusammenwirken ein Verlassen der Armlehne (1) aus der Verstaustellung verhindert, wobei die Armlehne (1) in der Gerbrauchstellung im Wesentlichen horizontal und in der Verstaustellung im Wesentlichen vertikal verläuft.

6. System gemäß einem der vorhergehenden Ansprüche, wobei das Verbindungselement (15) ein Stoppelement (19) aufweist, wobei das Stoppelement (19) in der Gebrauchsstellung mit einem ersten Anschlag (21) des Halterungsmittels (10) formschlüssig entlang der zweiten Drehrichtung (32) zusammenwirkt.

7. Rückenlehne (2) für einen Kraftfahrzeugsitz, wobei die Rückenlehne (2) ein System gemäß einem der vorhergehenden Ansprüche umfasst.

8. Kraftfahrzeugsitz aufweisend ein System gemäß einem der Ansprüche 1 bis 6.

## Claims

1. System having a pivotable armrest (1), having a bracket means (10) and having a pendulum element (18), wherein the armrest (1) is articulated on the bracket means (10) so as to be pivotable about a primary axis (11), wherein the armrest (1) is connected rotationally conjointly to a connecting element (15) and the bracket means (10) has the pendulum element (18), wherein the pendulum element (18) is pivotable about a secondary axis (12), wherein the connecting element (15) and the pendulum element (18) are designed such that, when a force acts on the system, the pendulum element (18) can be pivoted into a first position, wherein the pivoted pendulum element (18), in the first position, interacts in positively locking fashion with the connecting element (15) such that the positive locking action counteracts a pivoting of the connecting element (15) along a second direction of rotation (32), wherein the first direction of rotation (31) runs oppositely to the second direction of rotation (32), **characterized in that** the pendulum element (18) is preloaded with a restoring force by way of a spring element (25), wherein the spring element (25) is configured such that the restoring force counteracts a pivoting movement of the pendulum element (18) along the first direction of rotation (31), wherein the spring element (25) is articulated on the bracket means (10), wherein the spring element (25) is configured such that the force acting on the system must exceed a threshold value for the pivoting of the pendulum element (18), wherein the spring element (25) is configured such that, in the absence of the force acting on the system, the spring element (25) returns the pendulum element (18) into its original position immediately after an accident situation or after a braking situation.

2. System according to claim 1, wherein the bracket means (10) has a second abutment (22), wherein the second abutment (22) is configured such that, during a pivoting of the pendulum element (18) along the first direction of rotation (31), the positioning of the pendulum element (18) for the positively locking interaction with the connecting element (15) can be assisted by way of the second abutment (22).

3. System according to one of the preceding claims, wherein the pendulum element (18) and the connecting element (15) are designed such that the positively locking interaction between pendulum element (18) and connecting element (15) takes place along a direction running substantially perpendicular to the force direction.

4. System according to one of the preceding claims, wherein the pendulum element (18) comprises a first contact surface (41) and the connecting element (15) comprises a second contact surface (42), wherein the first contact surface (41) and the second contact surface (42) are arranged in contact with one another during the positively locking interaction of the pendulum element (18) with the connecting element (15).

5. System according to one of the preceding claims, wherein the pivotable armrest (1) can be transferred reversibly between a usage position and a stowage position, wherein the system is configured such that the positively locking interaction prevents the armrest (1) from departing from the stowage position, wherein the armrest (1) runs substantially horizontally in the usage position and runs substantially vertically in the stowage position.

6. System according to one of the preceding claims, wherein the connecting element (15) has a stop element (19), wherein, in the usage position, the stop element (19) interacts with a first abutment (21) of the bracket means (10) in positively locking fashion along the second direction of rotation (32).

7. Backrest (2) for a motor vehicle seat, wherein the backrest (2) comprises a system according to one of the preceding claims.

8. Motor vehicle seat which has a system according to one of Claims 1 to 6.

## Revendications

1. Système doté d'un accoudoir (1) pivotant, d'un moyen de maintien (10) et d'un élément pendulaire (18), dans lequel l'accoudoir (1) est articulé sur le moyen de maintien (10) de manière pivotante autour d'un axe primaire (11), dans lequel l'accoudoir (1) est raccordé de manière fixe en rotation à un élément de raccordement (15) et le moyen de maintien (10) comporte un élément pendulaire (18), dans lequel l'élément pendulaire (18) peut pivoter autour d'un axe secondaire (12), dans lequel l'élément de raccordement (15) et l'élément pendulaire (18) sont réalisés de telle sorte que l'élément pendulaire (18) peut pivoter dans une première position lorsqu'une force est exercée sur le système, dans lequel l'élément pendulaire (18) pivoté coopère par complémentarité de formes avec l'élément de raccordement (15) dans la première position de telle sorte que la complémentarité de formes contrecarre un pivotement de l'élément de raccordement (15) le long d'une deuxième direction de rotation (32), dans lequel la première direction de rotation (31) va dans le sens opposé de la deuxième direction de rotation (32), **caractérisé en ce que** l'élément pendulaire (18) est précontraint avec une force de rappel par le biais d'un élément de ressort (25), dans lequel l'élément de ressort (25) est configuré de telle sorte que la force de rappel contrecarre un mouvement de pivotement de l'élément pendulaire (18) le long de la première direction de rotation (31), dans lequel l'élément de ressort (25) est articulé sur le moyen de maintien (10), dans lequel l'élément de ressort (25) est configuré de telle sorte que la force s'exerçant sur le système doit dépasser une valeur seuil pour le pivotement de l'élément pendulaire (18), dans lequel l'élément de ressort (25) est configuré de telle façon que l'élément de ressort (25), après absence de la force s'exerçant sur le système, reconduit l'élément pendulaire (18) directement dans sa position originale après une situation d'accident ou une situation de freinage.

2. Système selon la revendication 1, dans lequel le moyen de maintien (10) comporte une deuxième butée (22), dans lequel la deuxième butée (22) est configurée de telle sorte que lors d'un pivotement de l'élément pendulaire (18) le long de la première direction de rotation (31), le positionnement de l'élément pendulaire (18) peut être assisté au moyen de la deuxième butée (22) pour la coopération par complémentarité de formes avec l'élément de raccordement (15).

3. Système selon l'une des revendications précédentes, dans lequel l'élément pendulaire (18) et l'élément de raccordement (15) sont réalisés de telle sorte que la coopération par complémentarité de formes entre l'élément pendulaire (18) et l'élément de raccordement (15) s'effectue le long d'une direction s'étendant de manière essentiellement perpendiculaire à la direction de la force.

4. Système selon l'une des revendications précédentes, dans lequel l'élément pendulaire (18) comprend une première surface de contact (41) et l'élément de raccordement (15) comprend une deuxième surface de contact (42), dans lequel la première surface de contact (41) et la deuxième surface de contact (42) sont agencées en contact l'une avec l'autre lors de la coopération par complémentarité de formes de l'élément pendulaire (18) avec l'élément de raccordement (15).

5. Système selon l'une des revendications précédentes, dans lequel l'accoudoir (1) pivotant peut passer entre une position d'utilisation et une position escamotée de manière réversible, le système étant configuré de telle sorte que la coopération par complémentarité de formes empêche l'accoudoir (1) de quitter la position escamotée, dans lequel l'accoudoir (1) s'étend de manière essentiellement horizontals dans la position d'utilisation et essentiellement verticals dans la position escamotée.

6. Système selon l'une des revendications précédentes, dans lequel l'élément de raccordement (15) comporte un élément d'arrêt (19), dans lequel l'élément d'arrêt (19) coopère par complémentarité de formes, dans la position d'utilisation, avec une première butée (21) du moyen de maintien (10) le long de la deuxième direction de rotation (32).

7. Dossier (2) pour siège de véhicule à moteur, le dossier (2) comprenant un système selon l'une des revendications précédentes.

8. Siège de véhicule à moteur comportant un système selon l'une des revendications 1 à 6.
